(19) **Europäisches Patentamt**

**European Patent Office**

**Office européen des brevets**

(11) **EP 1 367 898 B1**

(12) **EUROPEAN PATENT SPECIFICATION**

(45) Date of publication and mention
of the grant of the patent:
**16.08.2006 Bulletin 2006/33**

(51) Int Cl.:
*A01N 63/00* (2006.01)    *C12N 1/20* (2006.01)
*C12R 1/07* (2006.01)    *A01N 63/00* (2006.01)
*A01N 63/00* (2006.01)

(21) Application number: **02718953.9**

(22) Date of filing: **13.02.2002**

(86) International application number:
**PCT/US2002/004162**

(87) International publication number:
**WO 2002/065835 (29.08.2002 Gazette 2002/35)**

(54) **MIXTURE OF BACILLUS THURINGIENSIS SUBSPECIES ISRAELENSIS AND BAC ILLUS SPHAERICUS FOR MANAGEMENT OF RESISTANCE TO MOSQUITO LARVICIDES**

MISCHUNG VON BACILLUS THURINGIENSIS SUBSPECIES ISRAELENSIS UND BACILLUS SPHAERICUS ZUR BEKÄMPFUNG VON RESISTENZ GEGEN STECHMÜCKEN-LARVIZIDE

MELANGE DE SOUS ESPECES ISRAELENSIS DE BACILLUS THURINGIENSIS ET DE BACILLUS SPHAERICUS DESTINE A GERER LA RESISTANCE DE LARVICIDES DE MOUSTIQUES

(84) Designated Contracting States:
**AT BE CH CY DE DK ES FI FR GB GR IE IT LI LU MC NL PT SE TR**

(30) Priority: **16.02.2001 US 269513 P**

(43) Date of publication of application:
**10.12.2003 Bulletin 2003/50**

(73) Proprietor: **Valent Biosciences, Corp.**
**Libertyville**
**Illinois 60048 (US)**

(72) Inventors:
• **DECHANT, Peter**
**Portland, OR 97236 (US)**
• **DEVISETTY, Bala, N.**
**Buffalo Grove, IL 60089 (US)**

(74) Representative: **Modiano, Micaela Nadia**
**Modiano, Josif, Pisanty & Staub Ltd.,**
**Baaderstrasse 3**
**80469 München (DE)**

(56) References cited:
**WO-A1-98/28984**    **WO-A1-98/39973**
**DE-A1- 4 133 889**    **US-A- 5 283 060**
**US-A- 5 560 909**

• **WIRTH ET AL.: JOURNAL OF MEDICAL ENTOMOLOGY, vol. 37, no. 3, 2000, pages 401-407, XP009024743**

• **DATABASE WPI Section Ch, Week 200013 Derwent Publications Ltd., London, GB; Class C05, AN 2000-145827 XP002268170 & RU 2 111 667 C (FORA-INVEST STOCK CO), 27 May 1998 (1998-05-27)**
• **DATABASE WPI Section Ch, Week 200252 Derwent Publications Ltd., London, GB; Class D15, AN 2002-490594 XP002268171 & WO 02 48069 A (KOYOH CORP LTD), 20 June 2002 (2002-06-20)**
• **PONCET S ET AL: "IMPROVEMENT OF BACILLUS SPHAERICUS TOXICITY AGAINST DIPTERAN LARVAE BY INTEGRATION, VIA HOMOLOGOUS RECOMBINATION, OF THE CRY11A TOXIN GENE FROM BACILLUS THURINGIENSIS SUBSP. ISRAELENSIS" APPLIED AND ENVIRONMENTAL MICROBIOLOGY, WASHINGTON,DC, US, vol. 63, no. 11, November 1997 (1997-11), pages 4413-4420, XP002908696 ISSN: 0099-2240**
• **DATABASE CA [Online] CHEMICAL ABSTRACTS SERVICE, COLUMBUS, OHIO, US; SUN, FAN ET AL: "Reduction of resistance of Culex pipiens larvae to the binary toxin from Bacillus sphaericus by coexpression of Cry4Ba from Bacillus thuringiensis subsp. israelensis with the binary toxin gene" retrieved from STN Database accession no. 135:328357 XP002268168 & WORLD JOURNAL OF MICROBIOLOGY & BIOTECHNOLOGY (2001), 17(4), 385-389,**

EP 1 367 898 B1

• DATABASE CA [Online] CHEMICAL ABSTRACTS SERVICE, COLUMBUS, OHIO, US; SUN, FAN ET AL: "Synergism reaction between mosquital - larvicidal gene products from Bacillus sphaericus and B. thuringiensis subsp. israelensis" retrieved from STN Database accession no. 136:97797 XP002268169 & ZHONGGUO BINGDUXUE (2000), 15(SUPPL.), 116-119 ,

• RODCHAROEN J. ET AL.: 'Resistance development in Culex quinquefasciatus (Diptera: Culicidae) to bacillus sphaericus' JOURNAL OF ECONOMIC ENTOMOLOGY vol. 87, no. 5, 1994, pages 1133 - 1140, XP001157252

**Description**

Field of the Invention

The invention is directed to a method for controlling Dipteran larvae or a method for inhibiting larvicidal resistance in Diptera by introducing a larvicidally-effective amount of a combination of a strain of *Bacillus thuringiensis* subspecies *israelensis* and a strain of *Bacillus sphaericus* obtainable by a particular formulation method described below into an environment containing Dipteran larvae; and a composition of the combination obtainable by said method. Preferably, both strains are non-genetically modified.

Background of the Invention

Mosquitoes and black flies are representative of the order Diptera which are pests that have plagued humans and animals for generations. Mosquitoes are the major vectors for a number of human and animal diseases, including malaria, yellow fever, viral encephalitis, dengue fever and filariasis.

Various chemical pesticides have been developed with the goal of controlling Diptera. For example, treatment of a water source with a water-soluble alcohol in water-miscible form for mosquito abatement is disclosed in U.S. Patent No. 6,077,521. However, more recent emphasis has been placed on the use of biopesticides. For example, controlled-release formulations of at least one biological pesticidal ingredient are disclosed in U.S. Patent No. 4,865,842; control of mosquito larvae with a spore-forming *Bacillus* ONR-60A is disclosed in U.S. Patent No. 4,166,112; novel *Bacillus thuringiensis* isolates with activity against dipteran insect pests are disclosed in U.S. Patent Nos. 5,275,815 and 5,847,079; a biologically pure culture of a *Bacillus thuringiensis* strain with activity against insect pests of the order Diptera is disclosed in U.S. Patent No. 5,912,162 and a recombinantly derived biopesticide active against Diptera including cyanobacteria transformed with a plasmid containing a B. *thuringiensis* subsp. *israelensis* dipteracidal protein translationally fused to a strong, highly active native cyanobacteria's regulatory gene sequence is disclosed in U.S. Patent No. 5,518,897.

Yet even these biopesticides have drawbacks; so the search for new biopesticides continues. One drawback of certain biopesticides is the potential build-up of pesticidal resistance.

Resistance is defined by differences in susceptibility that arise among populations of the same species exposed to a pesticide continuously over a period of time. These differences are identified by observing a statistical shift in the lethal dose (LD) either to kill 50% or 95% of the population ($LD_{50}$ or $LD_{95}$ respectively). Individual differences in susceptibility exist within each species, and pests that are substantially less susceptible may be present, generally at low frequencies, in at least some of the wild populations. In the presence of the pesticide, it is these substantially less susceptible pests that survive and reproduce. Since their ability to survive is a result of their genetic makeup, their resistant genetic makeup is then passed on to their offspring, resulting in shifts in the populations' susceptibility via pesticide-induced selection. Resistance to larvicides has been encountered among certain Dipteran species.

Specifically, the development of resistance in *Culex quinquefasciatus* to *Bacillus sphaericus (B.s.)* is noted by Rodcharoen *et al*., Journal of Economic Entomology, Vol. 87, No. 5, 1994, pp. 1133-1140. A method for overcoming this resistance, by combining *B.s.* with purified Cyt1A crystals isolated from *Bacillus thuringiensis* subsp. *israelensis* or by combining a recombinant *B.t.i.* with *B.s.*, is disclosed by Wirth *et al.,* Journal of Medical Entomology, Vol. 37, No. 3, 2000, pp. 401-407.

RU 2 111 667 relates to a biological larvicide used to control mosquitos, based on a composition comprising preparates of *B. thuringiensis israelensis* and *B. sphaericus.*

WO 98/28984 A describes the preparation, in the form of ice granules, of endotoxins of *B. thuringiensis* and/or *B. sphaericus* for combatting mosquito larvae.

Poncet et al. (Applied and environmental Microbiology, vol. 63, no. 11, November 1997 (1997-11), 4413-4420) as well as Sun Fan et al. (World Journal of Microbiology and Biotechnology, 2001, 17(4), 385-389 and Zhongguo Bingduxue, 2000, 15(suppl.), 116-119) disclose the synergistic interaction between *B. sphaericus* and different toxins of B. *thuringiensis israelensis* (e.g. Cry1Aa, Cry4Aa, Cry4Ba, and Cry11Aa) in the control of mosquitos larvae and particularly, in the inhibition of larvicidal resistance.

However, improved but naturally derived or occurring biological larvicides and compositions to overcome *Culex* mosquito resistance to *B.s.* applications would be desirable.

Brief Summary of the Invention

The invention is directed to a method of preparing a composition comprising: a combination of a strain of *Bacillus thuringiensis* subspecies *israelensis* and a strain of *Bacillus sphaericus*, the method comprising the steps of fermenting the strains separately, concentrating each strain to the desired solids, concentration or activity, combining the concentrated strains to form a slurry mixture and spray drying the slurry mixture to yield individual particles. The invention is also directed to the product obtainable by this method. The strain of *Bacillus thuringiensis* subspecies *israelensis* may be non-genetically modified, or the strain of *Bacillus sphaericus* may be non-genetically modified, although a presently preferred combination includes a non-genetically modified strain of *Bacillus thuringiensis* subspecies *israelensis* and a non-genetically modified strain of *Bacillus sphaericus.*

The combination may have from about 1:10 to about 10:1 weight ratio of *Bacillus thuringiensis* subspecies *israelensis* to *Bacillus sphaericus;* preferably from about 1:3 to about 3:1 weight ratio of *Bacillus thuringiensis* subspecies *israelensis* to *Bacillus sphaericus;* more preferably from about 1:2 to about 2:1 weight ratio of *Bacillus thuringiensis* subspecies *israelensis* to *Bacillus sphaericus;* and most preferably a 1:1 ratio of *Bacillus thuringiensis* subspecies *israelensis* to *Bacillus sphaericus.*

Additional components such as surface active agents, inert carriers, preservatives, humectants, feeding stimulants, attractants, encapsulating agents, binders, emulsifiers, dyes, U.V. protectants, buffers, drift control agents, spray deposition aids, free-flow agents or combinations thereof may also be utilized in conjunction with the combination in a larvicidal composition.

The invention is also directed to a method of controlling Dipteran larvae comprising the step of introducing a larvicidally-effective amount of a combination of a strain of *Bacillus thuringiensis* subspecies *israelensis* and a strain of *Bacillus sphaericus* obtainable by the method defined above into an environment containing Dipteran larvae. In this method, Dipteran may be a mosquito such as *Culex pipiens, Culex quinquefasciatus, Aedes aegypti, Culex tarsalis, Culiseta incidens, Anopheles freeborni* or a combination thereof.

The invention is additionally directed to a method for inhibiting larvicidal resistance in Diptera comprising the step of introducing a larvicidally-effective amount of a combination of a strain of *Bacillus thuringiensis* subspecies *israelensis* and a strain of *Bacillus sphaericus* obtainable by the method defined above into an environment containing Dipteran larvae. Preferably, the Diptera is *Culex* and larvicidal resistance is developed against *Bacillus sphaericus.*

Detailed Description of the Invention

The invention is directed to a method for controlling Dipteran larvae or a method for inhibiting larvicidal resistance in Diptera by introducing a larvicidally-effective amount of a combination of a strain of *Bacillus thuringiensis* subspecies *israelensis* and a strain of *Bacillus sphaericus* obtainable by a method as defined above into an environment containing Dipteran larvae; and a composition of the combination obtainable by the method defined above. Preferably both strain are non-genetically modified. A detailed discussion of the composition, and the methods utilizing the composition follows.

*The Larvicidal Compositions*

Biopesticides are a class of naturally occurring pesticides frequently derived from unicellular or multicellular organisms which have developed natural defenses against other organisms. The group of microorganisms pathogenic to insects is varied and diverse. The gram-positive soil bacterium *Bacillus thuringiensis* subsp. *israelensis* is one of many *B. thuringiensis* strains able to produce insecticidal proteins. These proteins, expressed during the sporulation cycle of the bacterium, assemble into parasporal crystalline inclusion bodies. The parasporal crystal produced by *B. thuringiensis* subsp. *israelensis* is toxic when ingested by the larvae of Diptera, including mosquitoes and black flies. Upon ingestion, crystal proteins are solubilized in the larval midgut and disrupt the epithelium of the larval midgut region. Swelling and/or lysis of the epithelial cells is followed by larval death from starvation.

*Bacillus thuringienesis* subspecies *israelensis (B.t.i.)* has been used successfully in mosquito and blackfly control programs for many years. *B.t.i.* is utilized in clean to moderately clean organic breeding habitats, and is most effective on *Aedes* species. A commercial formulation of *B.t.i.* is known by the trademark VECTOBAC, available from Valent BioSciences Corp. Specific commercial formulations available from the same supplier are VECTOBAC G, VECTOBAC CG, VECTOBAC 12AS and VECTOBAC WDG. *B.t.i.* is effective against a broad range of mosquito species, offers low mammalian toxicity and is easy to apply. *B.t.i.* also has a very low susceptibility to the development of resistance, because its larvacidal activity is based on multiple toxins. The chances that individual mosquitoes within a treated population will not be susceptible to all toxins is extremely small.

*Bacillus sphaericus (B.s.)* is a rod-shaped, aerobic, spore-forming bacterium found commonly in soil and other substrates. To date, at least 16 strains have been found to show mosquitocidal properties of various degrees. Several strains such as 1593M, 2362 and 2297 exhibit high toxicity to mosquito larvae. *B.s.* strain 2362, (VECTOLEX, available from Valent BioSciences Corp.) has been utilized in many countries successfully. Specific commercial formulations of *B.s.* available from the same source are VECTOLEX WDG, SPHERIMOS AS and VECTOLEX CG. Moreover, this strain was found to perform well in controlling mosquitoes breeding in various habitats, especially ones with polluted water.

*B. s.* is most effective on *Culex* species. The activity of *B.s.* is due to a binary toxin, and repeated use can lead to development of resistance.

However, various levels of resistance to *B.s.* by mosquito larvae have been observed in *Culex pipiens* and *Culex quinquefasciatus.*

We have now found that a combination of *B.t.i.* and *B.s.* is an effective larvicidal formulation. Non-genetically modified components are utilized, which are desirable if the larvicide is to be utilized in an environment connected with production or harvesting of food sources such as crops, cattle or swine. Non-genetically modified *B.t.i.* or *B.s.* may be defined as strains which occur naturally, and are not strains resulting from recombinant DNA techniques.

*B.t.i.* and *B.s.* may be combined by mixing the powdered forms of each of the individual strains, or by mixing the slurries of the fermentation broths of each strain, in the desired ratio, as illustrated by Examples 1-6 which follow. The ratio of *B.t.i.* to *B.s.* may be from about 10:1 to about 1:10; preferably from about 3:1 to about 1:3, more preferably from about 2:1 to about 1:2 and most preferably about 1:1.

The compositions disclosed above may also include additional components such as a surface active agent, an inert carrier, a preservative, a humectant, a feeding stimulant, an attractant, a drift control agent, a spray deposition aid, an encapsulating agent, a binder, an emulsifier, a dye, a U.V. protectant, a buffer, a free-flow agent, or any other component which stabilizes the active ingredient, facilitates product handling and application for the particular target pests, Diptera.

Suitable surface-active agents include anionic compounds such as a carboxylate, for example, a metal carboxylate of a long chain fatty acid; a N-acylsarcosinate; mono or di-esters of phosphoric acid with fatty alcohol ethoxylates or salts of such esters; fatty alcohol sulphate such as sodium dodecyl sulphate, sodium octadecyl sulphate or sodium acetyl sulphate; ethoxylated fatty alcohol sulphates; ethoxylated alkylphenol sulphates; lignin sulphonates; petroleum sulphonates; alkyl aryl sulphonates such as alkyl-benzene sulphonates or lower alkylnaphthalene sulphonates, e.g., butyl-naphthalene sulphonate; salts or sulphonated naphthalene-formaldehyde condensates; salts of sulphonated phenol-formaldehyde condensates; or more complex sulphonates such as the amide sulphonates, e.g., the sulphonated condensation product of oleic acid and N-methyltaurine or the dialkyl sulphosuccinates, *e.g.*, the sodium sulphonate or dioctyl succinate.

Non-ionic agents include condensation products of fatty acid esters, fatty alcohols, fatty acid amides or fatty-alkyl- or alkenyl-substituted phenols with ethylene oxide, fatty esters of polyhydric alcohol ethers, e.g., sorbitan fatty acid esters, condensation products of such esters with ethylene oxide, e.g., polyoxythylene sorbitan fatty acids esters, block copolymers of ethylene oxide and propylene oxide, acetylenic glycols such as 2,4,7,9-tetraethyl-5-decyn-4,7 diol, or ethoxylated acetylenic glycols.

Examples of a cationic surface-active agent include, for instance, an aliphatic mono-, di-, or polyamide as an acetate, naphthenate or oleate; an oxygen-containing amine such as an amine oxide of polyoxethylene alkylamine; an amid-linked amine prepared by the condensation of a carboxylic acid with a di- or polyamine; or a quaternary ammonium salt.

Examples of inert materials include inorganic minerals such as kaolin, mica, gypsum, fertilizer, sand, phyllosilicates, carbonates, sulphate, or phosphates; organic materials such as sugars, starches, or cyclodextrins; or botanical materials such as wood products, cork, powdered corncobs, rice hulls, peanut hulls, and walnut shells

The formulation may also contain added drift control agents or spray deposition aids to control droplet size and to facilitate aerial application. Examples of suitable compounds for these purposes include polyvinylalcohol polymer solutions, polyamide copolymer solutions, polymerized acrylic acid derivatives and blends thereof, vegetable oils and blends thereof, petroleum oils and blends thereof, as well as natural and synthetic polymers.

In the formulations, more than one of the additional components described above may advantageously be utilized.

The compositions of the present invention can be applied as a liquid, an aqueous suspension, an emulsifiable suspension, or a solid by conventional application techniques for each. Solid formulations are presently preferred. In general, the application rate of the larvicidally-effective combination of the present invention will deliver a quantity of pesticide sufficient to control the population of a target pest.

Solid compositions may be formed by spray drying the *B.t.i.* and *B.s* slurries separately and combining the powder or by combining the slurries and spray drying the combined slurry to form a powder.

The composition of the present invention can be in a suitable form for direct application or as a concentrate or primary composition which requires dilution with a suitable quantity of water or other diluent before application. The pesticidal concentration will vary depending upon the nature of the particular formulation, specifically, whether it is a concentrate or to be used directly. The composition may contain from about 1 to 98% by weight of a solid or liquid inert carrier, and 0.1 to 50% by weight of a surfactant. These compositions will be administered at the rate of about 50 mg (liquid or dry) to 20 kg or more per hectare.

*The Methods*

The combination of the present invention can be treated prior to formulation to prolong the pesticidal activity when applied to the environment of a target pest as long as the pretreatment is not deleterious to the combination. Such treatment can be by chemical and/or physical means as long as the treatment does not deleteriously affect the properties of the composition(s). Examples of chemical reagents include, but are not limited to, halogenating agents; aldehydes such as formaldehyde and glutaraldehyde; anti-infectives, such as zephiran chloride; alcohols, such as isopropanol and ethanol; and histological fixatives, such as Bouin's fixative and Helly's fixatives.

The compositions of the invention can be applied directly to the environment to be treated. Ponds, lakes, streams, rivers, still water, and other areas subject to infestation by dipteran pests are examples of environments needing such treatment. The composition can be applied by spraying, dusting, sprinkling, and broadcasting, among others.

The compositions of the present invention may be effective against insect pests of the order Diptera, *e.g., Aedes* sp., *Andes vittatus, Anastrepha ludens, Anastrepha suspensa, Anopheles* sp., *Armigeres subalbatus, Calliphora stygian, Calliphora vicina, Ceratitis capitata, Chironomus tentans, Chrysomya rufifacies, Cochliomyia macellaria, Culex* sp., *Culiseta* sp., *Coquillettidia* sp., *Deino cerities* sp., *Dacus oleae, Delia antiqua, Delia platura, Delia radicum, Drosophila melanogaster, Eupeodes corollas, Glossina austeni, Glossina brevipalpis, Glossina fuscipes, Glossina moristans centralis, Glossina morsitans morsitans, Glossina morsitans submorsitans, Glossina pallidipes, Glossina palpalis gambiensis, Glossina palpalis palpalis, Glossina tachinoides, Haemagogus equines, Haematobia irritans, Hypoderma bovis, Hypoderma lineatum, Leucopis ninae, Lucilia cuprina, Lucilia sericata, Lutzomyia longlpaipis, Lutzomyia shannoni, Lycoriella mali, Mansonia* sp., *Mayetiola destructor, Musca autumnalis, Musca domestica, Neobellieria* sp., *Nephrotoma suturalis, Ochlerotatus* sp., *Ophyra aenescens, Orthopodomyia* sp., *Phaenicia sericata, Phlebotomus* sp., *Phormia regina, Psorophora* sp., *Sabethes cyaneus, Sarcophaga bullata, Scatophaga stercoraria, Stomoxys calcitrans, Toxorhynchites amboinensis, Tripteroides bambusa, Uranotaneia* sp. and *Wyeomyia* sp. However, the composition of the invention may also be effective against insect pests of the order Lepidoptera, *e.g., Achroia grisella, Acleris gloverana, Acleris variana, Adoxophyes orana, Agrotis ipsilon, Alabama argillacea, Alsophila pometaria, Amyelois transitella, Anagasta kuehniella, Anarsia lineatella, Anisota senatoria, Antheraea pernyi, Anticarsia gemmatalis,* Archips sp., Argyrotaenia sp., *Athetis mindara, Bombyx mori, Bucculatrix thurberiella, Cadra cautella,* Choristoneura sp., *Cochylis hospes, Colias eurytheme, Corcyra cephalonica, Cydia latiferreanus, Cydia pomonella, Datana integerrima, Dendrolimus sibericus, Desmia funeralis, Diaphania hyalinata, Diaphania nitidalis, Diatraea grandiosella, Diatraea saccharalis, Ennomos subsignaria, Eoreuma loftini, Ephestia elutella, Erannis tiliaria, Estigmene acrea, Eulia salubricola, Eupoecilia ambiguella, Euproctis chrysorrhoea, Euxoa messoria, Galleria mellonella, Grapholita molesta, Harrisinia americana, Helicoverpa subflexa, Helicoverpa zea, Heliothis virescens,* Hemileuca *oliviae, Homoeosoma electellum, Hyphantria cunea, Keiferia lycopersicella, Lambdina fiscellaria fiscellaria, Lambdina fiscellaria lugubrosa, Leucoma salicis, Lobesia botrana, Loxostege sticticalis, L ymantria dispar, Macalla thyrisalis,* Malacosoma sp., *Mamestra brassicae, Mamestra configurata, Manduca quinquemaculata, Manduca sexta, Maruca testulalis, Melanchra picta, Operophtera brumata,* Orgyia sp., *Ostrinia nubilalis, Paleacritia vernata, Papilio cresphontes, Pectinophora gossypiella, Phryganidia californica, Phyllonorycter blancardella, Pieris napi, Pieris rapae, Plathypena scabra, Platynota flouendana, Platynota sultana, Platyptilia carduidactyla, Plodia interpunctella, Plutella xylostella, Pontia protodice, Pseudaletia unipuncta, Pseudoplusia includens, Sabulodes aegrotata, Schizura concinna, Sitotroga cerealella, Spilonota ocellana,* Spodoptera sp., *Thaurnstopoea pityocampa, Tineloa bisselliella, Trichoplusia ni, Udea rubigalis, Xylomyges curialis, Yponomeuta padella;* Coleoptera, e.g., Leptinotarsa sp., *Acanthoscelides obtectus, Callosobruchus chinensis, Epilachna varivestis, Pyrrhalta luteola, Cylas formicarius elegantulus, Listronotus oregonensis,* Sitophilus sp., *Cyclocephala borealis, Cyclocephala immaculata, Macrodactylus subspinosus, Popillia japonica, Rhizotrogus majalis, Alphitobius diaperinus, Palorus ratzeburgi, Tenebrio molitor, Tenebrio obscurus, Tribolium* castaneum, *Tribolium confusum, Tribolius destructor,* Acari, e.g., *Oligonychus pratensis, Panonychus ulmi, Testranychus urticae;* Hymenoptera, e.g., *Iridomyrmex humilis, Solenopsis invicta;* Isoptera, e.g., *Reticulitermes hesperus, Reticulitermes flavipes, Coptotermes formosanus, Zootermopsis angusticollis, Neotermes connexus, Incisitermes minor, Incisitermes immigrans;* Siphonaptera, e.g., *Ceratophyllus gallinae, niger, Nosopsyllus fasciatus, Leptopsylla segnis, Ctenocephalides canis, Ctenocephalides felis, Echicnophaga gallinacea, Pulex irritans, Xenopsylla cheopis, Xenopsylla vexabilis, Tunga penetrans;* and Tylenchida, e.g., *Melodidogyne incognita, Pratylenchus penetrans.*

In a specific embodiment, the compositions of the invention are active against insect pests of the sub order *Nematocera* of the order Diptera. *Nematocera* include the families *Culicidae, Simulidae, Chironomidae, Psychodidae, Sciaridae, Phoridae* and *Mycetophilidae.*

The ability of combination of the present invention to inhibit larvicidal resistance is described in detail hereinafter in the Examples. These Examples are presented to describe preferred embodiments and utilities of the invention and are not meant to limit the invention unless otherwise stated in the claims appended hereto.

Reference Example 1

A combination larvicide was formulated as a mix of two commercially available strains: VECTOBAC CG, a commercial granular formulation of *B.t.i.* with a label potency of 200 ITU/mg, and VECTOLEX CG, a commercial granular formulation of *B.s.* with a label potency of 50 *B.s.* ITU/mg. Typically, the spray-dried technical concentrate of each strain is first incorporated into a known amount of vegetable oil binder. The amount of vegetable oil binder in the formula will depend upon the amount of *B.t.i.* or *B.s.* spray technical concentrate in the formula. The typical range may vary between 1% to 15% wt/wt. depending upon the amount of *B.t.i.* or *B.s.* spray dried technical concentrate, and the type, size and absorptive property of granular carrier utilized in the formula. In this example, corn cob granules of the size classification 10/14 Mesh were used. However, other size ranges such as 5/8 Mesh, 10/20 Mesh, 10/40 Mesh are also suitable. The slurry mixture was sprayed onto the granular carrier while mixing in a suitable blender and further blended until homogenous product was obtained.

Reference Example 2

A *B.t.i.* and *B.s.* granular formulation was prepared. Pre-formulated granular products of *B.t.i.* and *B.s.*, (VECTOBAC CG and VECTOLEX CG), were utilized in developing the combination formulation. The resultant combination granular product was targeted to contain *B.t.i.* at 100 ITU/mg and *B.s.* at 25 *B.s.* ITU/mg. The carrier utilized was 10/14 Mesh corn cob.

To prepare the formulation, 5 kg each of VECTOLEX CG and VECTOBAC CG were charged into a blender and blended. The product mix was then recovered.

Representative samples were taken for bioassay. Table 1 shows the amount of the raw materials which were used to form the product combination

Table 1

| Raw Material | % wt/wt | kg/batch |
|---|---|---|
| VECTOBAC CG* | 50.00 | 5.00 |
| VECTOLEX CG** | 50.00 | 5.00 |
| Total | 100.0 | 10.00 |
| * Commercial *B.t.i.* granular formulation with a label potency of 200 ITU/mg  ** Commercial *B.s.* granular formulation with a label potency of 50 *B.s.* ITU/mg | | |

Bioassay results for the *B.t.i.* and *B.s.* combination samples when tested against fourth instar *Aedes aegypti* and third instar *Culex quinquefaciatus* are shown in Table 2 below. ITU stands for international toxicity units, which are based on a reference material of known specific *B.t.i.* potency.

In a formulation, the one to one weight ratio of *B.t.i.* to *B.s.* has a potency of 100 ITU/mg for *B.t.i.* and 25 ITU/mg for *B.s.,* which is equivalent to a 4:1 ratio on a potency basis.

Table 2

| Sample | *B.t.i.* Potency | *B.s.* potency |
|---|---|---|
| VECTOBAC CG | 185 ITU/mg | 9 *B.s.* ITU/mg |
| VECTOLEX CG | 4 ITU/mg | 53 *B.s.* ITU/mg |
| 1:1 *B.t.i.* to *B.s.* | 102 ITU/mg | 30 *B.s.* ITU/mg |

Reference Example 3

A larvicidal combination product may also be formulated by combining the required levels of both *B.t.i.* and *B.s.* technical powders in the same binder liquid, and then impregnating or spraying onto the granular carrier such as corn cob or any other suitable carriers.

To prepare the formulation, both spray dried technical concentrates can be slurried in vegetable oil binder liquid and sprayed onto granular carrier in a suitable blender and mixed until a homogenous product is obtained. The theoretical components of the combination formulation containing *B.t.i.* at 100 ITU/mg and *B.s.* at 25 *B.s.* ITU/mg are provided in Table 3 below.

Table 3

| Component | % wt/wt | kg/Batch | Purpose |
|---|---|---|---|
| *B.t.i.* spray-dried technical concentrate or powder (5000 ITU/mg) | 2.00 | 20.00 | Active Ingredient |
| *B.s.* spray dried technical concentrate or powder (1000 *B.s.* ITU/mg) | 2.50 | 25.00 | Active Ingredient |
| Vegetable oil binder | 10.00 | 100.00 | Binder |
| Granular carrier | 85.5 | 855.00 | Carrier |

Example 4

The combined formulation of the invention is formed by pre-mixing fermentation beers or slurry concentrates of *Bti* and Bs at the desired solids or potency level and spray drying the slurry mixture to produce a combined technical spray dried powder concentrate. In such a formulation, the slurry concentrate may contain preservatives, stabilizers, surfactants, dispersants and other binders. The spray-dried technical concentrate or powder may then be utilized in formulating a granular product as in Examples 2 and 3 or as wettable powders, water dispersible granules, and aqueous or non-aqueous concentrates. These combined powder concentrates may also be utilized in pellet and/or briquette formulations. A spray drying experiment was performed combining *Bti* and *Bs* fermentation slurry concentrates at various ratios based on % solids level in each of the slurry concentrates. A *Bti* slurry concentrate was first preserved with 0.12% wt/wt of potassium sorbate and 0.06% wt/wt of methyl paraben. % solids in the preserved *Bti* slurry concentrate were 11.3% wt/wt. Similarly, a Bs slurry concentrate with 0.12% wt/wt of potassium sorbate and 0.06% wt/wt of methyl paraben was preserved. Per cent solids in the preserved Bs slurry concentrate had a mean % solids of 10.1% wt/wt. Slurry mixtures prepared and their rations on solids basis are given in Table 4

Table 4 *Bti* and *Bs* slurry mixtures evaluated

| Material\Ratio of *Bti* to *Bs* on solids basis | 1:0 | 1:1 | 3:1 | 1:3 | 2:1 | 1:2 |
|---|---|---|---|---|---|---|
| | A | B | C | D | E | F |
| *Bti* preserved slurry concentrate | 8.85 Kg | 4.42 Kg | 6.64 Kg | 2.21 Kg | 5.89 Kg | 2.95 Kg |
| Bs preserved slurry concentrate | ---- | 5.10 Kg | 2.55 Kg | 7.65 Kg | 3.41 Kg | 6.80 Kg |
| De-ionized water | 1.15 Kg | 0.48 Kg | 0.81 Kg | 0.14 Kg | 0.70 Kg | 0.25 Kg |
| *Total* | *10.0 Kg* | *10.0 Kg* | *10.0 Kg* | *10.0 Kg* | *10.0 Kg* | *10.0 Kg* |

The compositions as shown in Table 4 were combined and spray dried utilizing a Niro spray. Inlet temperature ranged between 180 °C and 190 °C and outlet temperature during drying ranged between 68 °C to 81 °C. The technical powders were sieved through 100-mesh standard sieve and samples were bioassayed against L4 *Aedes aegypti* and L3 *Culex quinquefasciatus.* Average potency data is represented in Table 5.

Table 5 Potency values of *Bti* + Bs. spray dried technical powders as affected by their ratios on solids basis. *Mean Bti* spray dried technical powder potency = 7474 ITU/mg. MeanBs spray dried technical powder potency = 3030 Bs. ITU/mg (All assays are average of initial and 2 month 5 $^0$C stored samples)

| Ratio of Bti to Bs on solids basis | Theoretical Bti Potency* (ITU/mg) | Actual Bti Potency (ITU/mg) | Actual Potency expressed as % of theoretical potency in Column 2. | Theoretical Bs Potency+ (Bs. ITU/mg) | Actual Bs Potency (Bs. ITU/mg) | Actual Potency expressed as % of theoretical potency in Column 5 |
|---|---|---|---|---|---|---|
| 1:1 | 3737 | 5174 | 138% | 1515 | 1642 | 108% |
| 3:1 | 5606 | 6122 | 109% | 758 | 1088 | 144% |
| 1:3 | 1869 | 4769 | 255% | 2273 | 2655 | 117% |

(continued)

| Ratio of Bti to Bs on solids basis | Theoretical Bti Potency* (ITU/mg) | Actual Bti Potency (ITU/mg) | Actual Potency expressed as % of theoretical potency in Column 2. | Theoretical Bs Potency+ (Bs. ITU/mg) | Actual Bs Potency (Bs. ITU/mg) | Actual Potency expressed as % of theoretical potency in Column 5 |
|---|---|---|---|---|---|---|
| 2:1 | 4983 | 5499 | 110% | 1009 | 1479 | 147% |
| 1:2 | 2489 | 3738 | 150% | 2020 | 2503 | 124% |
| *Mean* | *3737* | *5060* | | *1515* | *1873* | |

Biopotency data presented in Table 5 reveal an interesting but very synergistic increase in actual potency of both *Bti* and Bs over theoretical potencies, which are, based on actual potencies of 100% of either *Bti* or Bs spray dried technical powders. The best combination for increased activity on both *Aedes* and *Culex* appeared to be when *Bti* and *Bs* slurry concentrates are combined at 1 part of *Bti* to 2 parts of Bs on solids basis. For enhancing the Bs potency, the best combination was when two parts of *Bti* solids was combined with 1 part of Bs solids. In this combination, Bs potency showed 47% increase over theoretical potency. By combining the *Bti* and *Bs* slurry concentrates prior to spray drying, *Bti* potency on average showed an increase of 35% over mean theoretical mean potency while Bs potency showed an increase of 24% over theoretical mean potency. There appeared to be significant advantage in combining the slurry concentrates prior to spray drying and further formulating these powders as granules, wettable powders, water dispersible granules, or pellet formulations. The best possible explanation for these enhanced potency values appeared to be due to the fact that each spray dried particle carries both *Bti* and Bs toxins and spores. In other words, these are not physical mixtures as revealed in Example 2 or 3. Thus, these novel formulation approaches are likely to not only result in broad-spectrum activity but also will minimize the potential for build up of resistance. In other words, resistance management can also be achieved yet by another novel formulation approach.

Reference Example 5

A combination larvicidal formulation may also be prepared in liquid form by adding, at the desired level, both VECTOBAC WDG (3000 ITU/mg) and VECTOLEX WDG (650 ITU/mg) to water in the spray tank and mixing until a homogeneous dispersion is obtained. The suspension so formed may be delivered to the target habitat by various application methods. A liquid formulation is ideal for spray operations.

Reference Example 6

A liquid formulation may be prepared from liquid formulations of each individual strain. VECTOBAC 12AS and SPHERIMOS AS (aqueous suspension product forms marketed by Valent BioSciences Corp.) may also be mixed in water in the spray tank and applied by various spray application equipment. Formulating *B.t.i.* and *B.s.* as one aqueous formulation with preservatives, stabilizers, surfactants, dispersants, diluents is yet another preferred method for delivering both toxins to the mosquito habitats.

Reference Example 7

The change in susceptibility of *Culex quinquefasciatus* laboratory colonies known to be *B. s.* resistant, in response to selection with a mixture of *B.t.i.* and *B.s.* was determined in the laboratory in the following manner. Selection refers to treatment at less than $LC_{100}$ level.

A colony of *Culex quinquefasciatus* resistant to *B.s.* was started from susceptible larvae collected from a waste water lagoon of a dairy in the western United States. Field collected larvae were subjected to selection at $LC_{90}$ every generation for forty generations. At the 40th generation, the colony showed a 54.4 and 14.2 fold resistance at $LC_{50}$ and $LC_{90}$ levels respectively. This colony was used for the subsequent tests.

A resistant colony is one which demonstrates a significant decrease in susceptibility to a particular pesticide over that expected for wild type insects. Generally, a five-fold or more decrease in susceptibility indicates resistance. Rodcharoen et *al.,* Journal of Economic Entomology, Vol. 87, No. 5, 1994, pp. 1133-1140 explore the concept of resistance more fully.

A susceptible colony is one which is effectively killed by a particular pesticide. For example, in *Culex quinquifasciatus,* if a particular pesticide, *Bacillus sphaericus,* has a measured $LC_{50}$ value of less than 0.1 ppm, the colony is characterized as susceptible to that pesticide.

Stock suspensions were prepared by mixing 0.2 g of *B.t.i.* or *B.s.* in 20 ml of distilled water to make a 1% suspension; mixtures were made by combining the stock suspensions in the desired ratio. Suspensions were subsequently diluted as required for test treatments.

The parental colony and the tenth generation were bioassayed by placing 20 late third or early fourth instar larvae in a 116 ml waxed paper cup containing 100 ml distilled water. One drop of larval diet (2 g of ground up rabbit pellets in 20 ml distilled water) was added per cup. The cups were treated with a range of concentrations of either larvicide alone, as well as the mixture. Five to seven different concentrations in the range of 0.0001-0.1 ppm were utilized in each bioassay to yield mortalities. Each concentration was replicated four to five times in each test. The treated larvae were held at 82-85 F. To determine $LC_{50}$ values, the number of dead larvae were counted at regular intervals from the time of treatment with the test larvicide. Once all larvae died, the concentration wherein 50% had been killed could be determined.

Colonies treated individually at the $LC_{80}$ level with *B.s. (Bacillus sphaericus* strain 2362, ABG-6184, VECTOLEX, available from Valent BioSciences Corp.) or *B.t.i. (Bacillus thuringiensis* subsp. *israelensis* (VECTOBAC available from Valent BioSciences Corp.) were compared to a colony treated with a 1:2 weight ratio of *B.s.* (VECTOLEX) to *B.t.i.* (VECTOBAC) for five generations at the $LC_{80}$ level, followed by treatment with a 1:1 weight ratio of *B.s.* (VECTOLEX) to *B.t.i.* (VECTOBAC) for five more generations at the $LC_{80}$ level.

Following the first five generations of these treatments, lower mean *B.s.* $LC_{50}$ values were obtained for the colonies subjected to selection by the 1:2 combination than for either colony selected by the individual components, indicating an increased susceptibility and consequently decreased resistance as illustrated by Table 6. Mean *B.s.* $LC_{50}$ values continued to decline under selection with the 1:1 combination during the subsequent five generations.

Table 6

This table shows data from the original selection study through F25. One key change in the selection was that the *B.t.i.* selected colony was switched to *B.s.* selection after F10 to assess stability of susceptibility in the colony.

Table 6 Change in *B.s.* Susceptibility in ppm of a *B.s.* Resistant Colony in Response to selection with *B.t.i., B.s.* and mixtures

| Treatment | LC50 of Parental Colony | LC50 of 5th Generation | LC50 of 10th Generation | LC50 of 15th Generation | LC50 of 20th Generation | LC50 of 25th Generation |
|---|---|---|---|---|---|---|
| *B.t.i.* | 0.49 | 0.351 | 0.205 | *0.315 | *0.366 | *0.308 |
| *B.s.* | 0.49 | 0.452 | 0.42 | 0.42 | 0.554 | 0.464 |
| *B.t.i. and B.s.* | 0.33 | 0.273 | 0.103 | 0.153 | 0.035 | 0.04 |
| *Selection was switched back to *B.s.* from generation 10 to 25. | | | | | | |

Reference Example 8

The bioassay procedure described in Example 7 was utilized in order to assess the susceptibility of *B.s.* resistant and susceptible *Culex quinquefasciatus* colonies to *B.t.i., B.s.* a 2:1 mixture of *B.t.i.* to *B.s.*

Mean $LC_{50}$ values were determined for each treatment. A lower mean $LC_{50}$ value indicates that the particular treatment can be used effectively at a lower concentration, which indicates that the organisms are more susceptible to the treatment.

The results are provided in Table 7 below. As expected, the *B.s.* treatment gave the highest mean $LC_{50}$ for the *B.s.* resistant colony. However, the 2:1 ratio mixture shows an improved result over the result for *B.t.i.* and *B.s.* alone, both in susceptible and resistant colonies, indicating a higher susceptibility and possible synergism when the components are combined.

Table 7

| Susceptibility in ppm of Two Laboratory *Culex quinquefasciatus* Colonies to *B.t.i.*, *B.s.* and a 2:1 Mixture of *B.t.i.* to *B.s.* | | |
|---|---|---|
| Treatment | Mean LC$_{50}$ in Resistant Colony | Mean LC$_{50}$ in Susceptible Colony |
| *B.t.i.* | 0.025 | 0.017 |
| *B.s.* | 0.330 | 0.009 |
| 2:1 *B.t.i.*: *B.s.* | 0.011 | 0.004 |

Reference Example 9

The efficacy of a 2:1 mixture of *B.t.i.* to *B.s.* on *Culex quinquefasciatus* colonies determined to be susceptible to *B.s.* was tested as follows.

A mixed susceptible colony of *Culex quinquefasciatus* was established from a combination of egg rafts collected from a site in the western United States. The collected egg rafts were individually transferred to 230 ml waxed paper cups each holding 200 ml tap water and 0.5 g rabbit pellets as larval diet. The larvae were hatched out. Then pupae were removed into cups with water and placed in screen cages, where the adults emerged. The adults were provided with 10% sucrose solution, and on day five after emergence, females were allowed to feed on restrained chicks. On day 5 subsequent to this blood feeding, oviposition cups were introduced into the cages to collect eggs. To maintain the colony in the laboratory, 4-5 egg rafts were placed in an enamel pan containing 2 liters of tap water and 2 g. of rabbit pellets as larval diet.

The sample preparation conditions, bioassay method, and LC$_{50}$ determination were the same as those described in Example 7. The results are provided in Table 8 below. The results show that over time, the test colony which was *B.s.* susceptible, becomes less susceptible by the fifth generation in response to treatment with *B.s.* alone, since the LC$_{50}$ value increases. In contrast, the 2:1 mixture does not show the same tendency to the same extent. This fact is indicated by the data which, while showing an increase in LC$_{50}$ over the parental strain, also show less of an increase than for the treatment with *B.s.* alone. Therefore, use of the 2:1 *B.t.i.* and *B.s.* mix slowed the resistance over time.

Table 8

Table 8 also shows data from the original selection study through F20. One key change in the selection was that the mixture-selected colony was switched from a 2:1 *B.t.i*/*B.s.* (VectoBac WDG/VectoLex WDG) to a 1:1 mixture selection after F5.

Table 8 Change in susceptibility of a *B.s.* Susceptible Colony in Response to *B.t.i* and *B.s.* mixtures.

| Treatment | LC50 of Parental Colony | LC50 of 5th Generation | LC50 of 10th Generation | LC50 of 15th Generation | LC50 of 20th Generation |
|---|---|---|---|---|---|
| *B.s.* | 0.009 | 0.035 | 0.066 | 0.194 | 0.124 |
| *B.t.i. And B.s.* | 0.009 | 0.024 | 0.028 | 0.013 | 0.044 |

Reference Example 10

The following experiment was performed to demonstrate the utility of the mixture for controlling mosquitos of varying species. In this example, the effectiveness of the mixture and each individual larvicide were determined on a mixed population of *Culex quinquefasciatus* and *Aedes aegypti*.

Twenty plastic rearing tubs were placed outside in a midwestern United States location. The tubs were filled with deionized water and enriched with 2.4 g of ground guinea pig chow. The tubs were then infested with 100 third instar *Culex quinquefasciatus* and 100 third instar *Aedes aegypti*. One hour after the infestation, and just prior to treatment, tubs were sampled and the number of larvae in a test sample from each tub were counted, to obtain a control value.

Test larvicides included VECTOLEX CG (50 *B.s.* ITU/mg on corn cob granules), VECTOBAC CG (200 ITU/mg on corn cob granules) and a 1:1 mixture of VECTOLEX CG and VECTOBAC CG, as described in Example 2. Each tub was treated with an appropriate amount of one of the three test larvicides, equivalent to a single treatment rate of 5, 10 or 20 lbs/acre.

On the fifth and twelfth day after treatment, 100 third instar *Culex quinquefasciatus* and 100 third instar *Aedes aegypti* were added to each tub.

Larvae were sampled from the tubs on the second day, the seventh day and the fourteenth day after treatment to determine how many were still alive. The numbers were obtained and compared to the number of larvae alive prior to treatment. 100% reduction indicates that all larvae were killed. A positive number for percent reduction indicates that the larvicide does kill. The results are provided in Table 9 below, indicating that the 1:1 mixture of *B.t.i.* to *B. s.* can control *Culex quinquefasciatus* and *Aedes aegypti* larvae, even over a period of several days, at each application rate tested.

Table 9

| Average Percent Reduction | | | | |
|---|---|---|---|---|
| Treatment | Application Rate (lb/acre) | % reduction in larvae - Day 2 | % reduction in larvae - Day 7 | % reduction in larvae - Day 14 |
| 1:1 *B.t.:B.s.* | 5 | 100 | 55 | 56 |
| *B. s.* | 5 | 95 | 77 | 34 |
| *B.t.i.* | 5 | 100 | 84 | 73 |
| 1:1 *B.t.:B.s.* | 10 | 100 | 98 | 91 |
| *B. s* | 10 | 81 | 44 | 50 |
| *B.t.i.* | 10 | 100 | 92 | 78 |
| 1:1 *B.t.:B.s.* | 20 | 100 | 97 | 90 |
| *B. s* | 20 | 88 | 82 | 64 |
| *B.t.i.* | 20 | 100 | 100 | 76 |

Reference Example 11

Another experiment was performed to demonstrate the utility of the mixture for killing mosquitos of varying species. In this example, the effectiveness of the mixture and each individual larvicide were determined on *Culex tarsalis.*
The test was performed on mosquitoes in a waste water pond of a waste water treatment facility in the western United States. The pond was extremely polluted, and standard tests showed the presence of *Culex tarsalis.* Tall reeds covered 80% of the water surface. The edge of the pond was divided into six plots ranging from 0.1 to 0.2 acres in size, for the purposes of the test.
Just prior to treatment, each test plot was sampled and the number of larvae in a test sample from each plot were counted, to obtain a control value.
Test larvicides were the formulations described in Example 10, and then each plot was treated with an appropriate amount of one of the three test larvicides, equivalent to a single treatment rate of 5 or 10 lbs/acre.
Larvae were sampled from the test plots on the second day, the seventh day and the fourteenth day after treatment, to determine how many were still alive. The numbers were obtained and compared to the number of larvae alive prior to treatment. 100% reduction indicates that all larvae were killed. A positive number for percent reduction indicates that the larvicide does kill. The results are provided in Table 10 below, indicating that the 1:1 mixture of *B.t.i.* to *B.* s. can control *Culex tarsalis* larvae.

Table 10

| Average Percent Reduction | | | | |
|---|---|---|---|---|
| Treatment | Application Rate (lb/acre) | % reduction in larvae - Day 2 | % reduction in larvae - Day 7 | % reduction in larvae - Day 14 |
| 1:1 *B.t.:B.s.* | 5 | 9 | 93 | 6 |
| *B. s.* | 5 | 90 | 100 | 100 |
| *B.t.i.* | 5 | -25 | 47 | 28 |
| 1:1 *B.t.:B.s.* | 10 | 88 | 96 | 65 |
| *B. s.* | 10 | 83 | 98 | 65 |

Reference Example 12

Another experiment was performed to demonstrate the utility of the mixture for killing mosquitos of varying species. In this example, the effectiveness of the mixture and each individual larvicide were determined on *Culex pipiens* and *Culiseta incidens* outdoors in a roadside ditch.

Two sections of a roadside ditch separated by a driveway in the western United States were the site of the study. The ditches were vegetated with grasses and aquatic plants and received seepage runoff from a septic system as well as rainfall. A drainage swale with similar hydrology and vegetation was selected as the untreated control. Each site was populated with *Culex pipiens* and *Culiseta incidens* at the time of treatment.

Just prior to treatment, each test plot was sampled and the number of larvae in a test sample from each plot were counted, to obtain a control value.

Test larvicides were of the formulations described in described in Example 10, and then two of the test sites were treated with an appropriate amount of one of the two test larvicides, equivalent to a single treatment rate of 20 lbs/acre. The remaining test site was untreated, to serve as the control.

Larvae were sampled from the test plots on the fourth day and the seventh day after treatment. The numbers were obtained and compared to the number of larvae prior to treatment. 100% reduction indicates that all larvae were killed. A positive number for percent reduction indicates that the larvicide does kill. The results are provided in Table 11 below, indicating that the 1:1 mixture of *B.t.i.* to B. s. can control *Culex pipiens* and *Culiseta incidens* larvae.

Table 11

| Average Percent Reduction | | |
|---|---|---|
| Treatment | % reduction in larvae - Day 4 | % reduction in larvae - Day 7 |
| 1:1 *B.t.:B.s.* | 100 | 98 |
| *B. s.* | 100 | 100 |

Reference Example 13

The efficacy of a 2:1 mixture *B.s.* (VECTOLEX) to *B.t.i.* (VECTOBAC) was determined in the field in the following manner.

The test field was a rice field in the western United States, measuring 156 acres. Levees were used a buffer zones between test plots. At the time of the treatment, *Anopheles freeborni* larvae were present at a density of 0.5-3.0 per dip, according to a standard dip test. Each individual larvicide, and the larvicidal combination were applied at a rate of 12 lbs/acre by airplane, which applied the granules at a speed of 85 miles per hour and with a swath width of 60 feet.

Larval counts were performed on days 2, 6 and 15 post-treatment, and measured against the larval count of an untreated control test plot. The results are shown in Table 12 below, illustrating that a 2:1 mix effectively kills larvae, as a positive number for percent control of larvae indicates that the larvicide does kill.

Table 12

| Average Percent Reduction | | | |
|---|---|---|---|
| Treatment | % control of larvae at Day 2 | % control of larvae at Day 6 | % control of larvae at Day 15 |
| 2:1 *B.t.i. to B.s.* | 50 | 100 | 0 |
| *B. s.* | 81 | 87 | 93 |
| *B.t.i.* | 100 | 100 | 90 |

Reference Example 14

The following studies demonstrate the susceptibility of various *B.s.* susceptible and non-susceptible mosquitoes to mixtures. They support the claims of mixtures as a method of controlling mosquitoes, and controlling *B.s.* resistant mosquitoes. Three of the studies also support the method of mixing technical powders prior to formulation of granules. Efficacy of a 1:1 mixture of *B.t.i. and B.s.* Formulations for Control of *B.s.* Resistant *Culex quinquefasciatus* Field Populations Compared to Each Formulation Separately.

Materials and Methods

A highly resistant population of *Culex quinquefasciatus* was identified in Wat Pikul, Bang Yai District, Nonthaburi Province, Thailand. This population was treated with various doses of VectoBac WDG (3000 Bti ITU) and VectoLex WDG (650 Bs ITU) and a 1:1 mixture of the two between January and September of 2001. Following each treatment, population changes were assessed over time by dipping, and percent control of late instar larvae and pupae was calculated for post treatment days.

**Results**

Doses of VectoLex WDG as high as 200 mg/m2 resulted in little or no control of this population. VectoBac WDG was found to provide control at doses as low as 20 mg/m2. A 1:1 mix of the two products was found to be more effective than either product alone at a dose of 20mg/m2.

Table 13

| Percent reduction of a *B.s.* resistant *Culex quinquefasciatus* field population after treatment with *B.s., B.t.i.,* and a mixture of *B.t.i* and *B.s.* | | | |
|---|---|---|---|
| Treatment | Day 2 | Day 7 | Day 14 |
| *B.s. 650 ITU @ 200 mg/m$^2$* | 13 | nd | nd |
| *B.t.i. 3000 ITU @ 20 mg/m2* | 87 | 46 | -53 |
| *1:1 mix (B.s. 325 ITU + B.t.i. 1500 ITU) @ 20 mg/m$^2$* | 97 | 50 | 22 |

Efficacy of Two *B.t.i./B.s.* Combination Formulations For Control of *Culex pipiens* and *Culiseta incidens* Compared to Standard *B.s.* Formulation in Artificial Plots

Materials and Methods

Twenty eight artificial test plots were set up using wading pools in the parking area of Multonomah County Mosquito Control District's facility at 5235 N. Columbia Blvd, Portland, OR on July 27, 2001. The pools were set out in four rows with seven pools per row. Each row was designated as a test series. The pools were filled to a depth of approximately 8" with tap water from the District's water supply. This depth was. maintained throughout the study. Each pool had an approximate surface area of .785 M$^2$. Each pool was enriched with straw and rabbit chow (100gr.) to provide habitat and food for the mosquito larvae.

The pools were left to season the hay/rabbit chow mix, and to allow natural populations of the local mosquitoes to become established. Artificial stocking of the test pools was done after the local mosquito populations failed to produce adequate populations in the pools for the study. After this initial stocking, populations of *Culex pipiens* and *Culiseta incidens* maintained themselves by natural re-infestation.

Three formulations, designated ABG6185, VBC60015 and VBC60019 were compared in the study. ABG-6185 consisted of *B.s.* technical powder formulated onto corncob and had a potency of 50 *B.s.* ITU. VBC-60015 and VBC-60019 were combinations of *B.t.i.* and *B.s.* technical powders formulated onto corncob and had theoretical potencies of 200*B.t.i./*50*B.s.* ITU and 100*B.t.i./*50*B.s.* ITU respectively. Formulations were tested at application rates of 2.5kg/ha and 5kg/ha compared to untreated controls. Four replications were done for each application rate and UTC in a random pattern throughout the test series.

Sampling was done by taking 5 dips per pool using standard mosquito dippers and concentrating the larval catch with fine mesh strainers. Composite samples were preserved in alcohol for counting and species identification. Larval counts were recorded as L1-L2, L3-L4 and pupae.

Pretreatment counts, and the test product applications were done on August 20, 2001. The initial post-treatment larval counts were done on August 23, 2001 approximately 64 hours after the treatment. Follow-up counts were done on August 27, August 31 and a final count on September 6, 2001.

Control success was determined by calculating mean numbers of 3$^{rd}$ and 4$^{th}$ stage larvae, and pupae in the pre and post-treatment counts from the four replicates of each test. Percent control was calculated by and applying Mulla's formula to the overall population means for each treatment.

## Results

Following treatment, mean populations in all treated plots declined relative to the untreated control plots, and were significantly lower (P=.05 Student-Newman-Keuls) than the UTC at 7 days post treatment. There were numerical, but not statistically significant differences between individual treatments. Initial reductions (3 days post treatment) were highest overall for the combination formulations, and similar control was seen from the formulation throughout the duration of the study. Percent reductions from treatments at 2.5 kg/ha are shown in Table 14. Table 12 Corrected percent reduction of L3-L4 *Culex* and *Culesita* larvae in artificial plots following application of treatments at 2.5 kg/ha.*

Table 14

| Treatment | Day 3 | Day 7 | Day 11 | Day 17 |
|---|---|---|---|---|
| *B.s. 50ITU* | 33.1 | 55.1 | 71 | 74.6 |
| *VBC 60015 (B.t.i. 200 ITU/B.s. 50ITU)* | 65.1 | 97.2 | 97.2 | 81.2 |
| *VBC 60019 (B.t.i. 100 ITU/B.s. 50ITU)* | 82.5 | 94.1 | 85.8 | 65.7 |
| *corrected against UTC based on population means from 5 replicates | | | | |

Efficacy of Two *B.t.i./B.s.* Combination Formulations for control of *Culex tarsalis* and *Culex pipiens* Compared to Standard *B.s.* Formulation in Small Field Plots

Materials and Methods

The test site was a marsh where a small stream entered the Yakima River near Yakima, Washington. Natural populations of *Culex tarsalis* and *Culex pipiens* were present. Water was essentially stagnant. Depth was 6-12 inches and remained constant throughout the experiment. Water temperature ranged between 72 and 77 throughout the experiment. Vegetation was primarily grass with scattered broadleaf weeds covering 80% of the surface. plant height was 6-15 inches in height. Cattle occasionally grazed in the site, but were not present during the test. Organic matter was very high at the site. Predator populations were generally low in the plots.

The test was a randomized complete block experiment with three, 1000 square foot plots per treatment. Plots were sampled immediately prior to the application on 7-19-01 and again 48 hours, 7 and 14 days after the application. Twenty dips with a standard mosquito dipper were made in each plot. Larvae instar 1-2, larvae instar 3-4 and pupae were counted in each dip.

Three formulations, designated ABG6185, VBC60015 and VBC60019 were compared in the study. ABG-6185 consisted of *B.s.* technical powder formulated onto corncob and had a potency of 50 *B.s* ITU. VBC-60015 and VBC-60019 were combinations of *B.t.i.* an *B.s.* technical powders formulated onto corncob and had theoretical potencies of 200*B.t.i.*/50*B.s.* ITU and 100*B.t.i.*/50*B.s.* ITU respectively. Formulations were tested at an application rate of 5 lb/acre and compared to untreated controls. Data were analyzed with Analysis of Variance. Percent reductions were calculated with Mulla's formula and based on large larvae and pupae only. Overall population means for each treatment were used in this calculation.

## Results

At two days after treatment, all three formulations provided significant although not outstanding control. The rate of 5 lbs/A may have been rather low for this site. Control at 7 and 14 days was not significant largely because the larval population in replicate two of the UTC had very low population. Nonetheless, percentage control was higher in all the treated plots than in untreated plots on day 7 and 14. In comparing the formulations, there did not appear to be any difference between treatments at day 2 but both the VBC formulations were better than ABG-6185 at day 7. Corrected percent reductions calculated using overall population means of L3-pupae are shown in Table 15.

Table 15 Corrected percent reduction of L3-L4 *Culex* larvae and pupae in small field plots following application of treatments at 5 lb/acre.*

Table 15

| Treatment | Day 2 | Day 7 | Day 14 |
|---|---|---|---|
| *B.s. 50 ITU* | 50.0 | 52.3 | 17.3 |

(continued)

| Treatment | Day 2 | Day 7 | Day 14 |
|---|---|---|---|
| *VBC 60015 (B.t.i. 200 ITU/B.s. 50 ITU)* | 58.0 | 73.4 | 64.0 |
| *VBC 60019 (B.t.i. 100 ITU/B.s. 50 ITU)* | 59.4 | 81.7 | 38.4 |

Efficacy of Four *B.t.i./B.s.* Combination Formulations for Control of *Ochlerotatus taeniorhynchus* Compared to Standard *B.t.i.* Formulation in Artificial Plots

Materials and Methods

Twenty-four artificial test plots located at the John A. Mulrenan, Sr., Public Health Entomology Research and Education Center, in Panama City, Florida were utilized in this study. The plots were filled to a depth of approximately 6" with 3-5 ppt saline water. This depth was maintained throughout the study. Each plot had an approximate surface area of 8 ft$^2$. Emergent grasses and a sandy soil substrate were present in the plots. Water temperature averaged 75 degrees Fahrenheit during the study.

Artificial infestation of the test plots was done prior to initial treatment and every other day following the treatments. Approximately 1000 third instar *Ochlerotatus taeniorhynchus* larvae were added to each plot on each infestation day.

Five formulations, designated ABG6138s, VBC60015, VBC60016, VBC60018 and VBC60019 were compared in the study. ABG-6138s consisted of *B.t.i..* technical powder formulated onto corncob and had a potency of 200 *B.t.i.* ITU. VBC-60015, VBC60016, VBC60018 and VBC-60019 were combinations of *B.t.i.* and *B.s.* technical powders formulated onto corncob and had theoretical potencies of 200*B.t.i.*/50*B.s.* ITU, 100*B.t.i.*/25*B.s.* ITU, 200*B.t.i*/25*B.s.* ITU, and 100*B.t.i.*/50*B.s.* ITU respectively. Formulations were tested at application rates of 2.8kg/ha compared to untreated controls. Four replications were done for each application rate and UTC in a random pattern throughout the test series.

Sampling was done by taking 8 dips per plot, using standard mosquito dippers. Numbers of larvae collected from each plot were recorded. Initial sampling was done 1 day following initial infestation and treatment, and repeated on days 2, 3, 5, 7, 10, and 13 following treatment.

Control success was determined by comparing number of larvae collected in treated plots to numbers collected in the UTC plots. Percent mortality was calculated for each treatment using the following formula.

$$\% \text{ mortality} = (\# \text{ larvae in control} - \# \text{ of larvae in treatment})/ \# \text{ larvae in control}$$

Results

One day after treatment, populations in all treated plots were significantly lower than in the UTC plots. Mean percent reductions on day one ranged from 79.7% for VBC60015 to 98.5 % for VBC60018. There were no significant differences between the treatments on this day. The materials continued to show efficacy through day 7 of the study, after which time percent control declined rapidly. Three of the combination treatments, VBC60015, VBC60018 and VBC60019, provided significantly higher overall percent reductions through the course of the 13-day study (LSMEANSSS multiple comparison test p=0.05). Percent reductions through day 7 from treatments at 2.8 kg/ha are shown in Table 16. Table 16. Percent reductions through day 7 from treatments at 2.8 kg/ha

Table 16

| Treatment | Day1 | Day2 | Day 3 | Day 5 | Day 7 |
|---|---|---|---|---|---|
| *B.s. 50 ITU* | 84.9 | 58.8 | 51.6 | 71.7 | 14.8 |
| *VBC 60015 (B.t.i. 200 ITU/B.s. 50 ITU)* | 79.7 | 71.9 | 76.5 | 67.3 | 43.5 |
| *VBC 60016 (B.t.i. 100 ITU/B.s. 25 ITU)* | 84.2 | 75 | 19.3 | 63.8 | 20.5 |
| *VBC 60018 (B.t.i. 200 ITU/B.s. 25 ITU)* | 98.5 | 65.7 | 64.2 | 70.3 | 38 |
| *VBC 60019 (B.t.i. 100 ITU/B.s. 50 ITU)* | 91.3 | 67.1 | 62.7 | 60.4 | 28.1 |

**Claims**

1. A method of preparing a composition comprising a combination of a strain of *Bacillus thuringiensis* subspecies *israelensis* and a strain of *Bacillus sphaericus* comprising the steps of fermenting the strains separately, concentrating each strain to the desired solids, concentration or activity, combining the concentrated strains to form a slurry mixture and spray drying the slurry mixture to yield individual particles which contain toxins from both *Bacillus thuringiensis* subspecies *israelensis* and *Bacillus sphaericus.*

2. The method of Claim 1 wherein the particles are used in various larvicide product forms selected from the group consisting of powders, granules, wettable powders, water dispersible granules, pellets, briquettes, aqueous suspensions, emulsifiable suspensions, and aqueous or non-aqueous concentrates.

3. The method of Claim 1 comprising adding to said composition a component selected from the group consisting of a surface active agent, an inert carrier, a preservative, a humectant, a feeding stimulant, an attractant, an encapsulating agent, a binder, an emulsifier, a dye, a U.V. protectant, a buffer, a drift control agent, a spray deposition aid, a free-flow agent and combinations thereof.

4. A product producible by the process of Claim 1.

5. A method of controlling Dipteran larvae comprising introducing a larvicidally-effective amount of a product producible by the process of Claim 1 into an environment containing Dipteran larvae.

**Patentansprüche**

1. Verfahren zur Herstellung einer Zusammensetzung, umfassend eine Kombination aus dem Stamm *Bacillus thuringiensis* Unterart *israelensis* und dem Stamm *Bacillus sphaericus,* umfassend die Schritte getrenntes Fermentieren der Stämme, Konzentrieren jedes Stammes zu den gewünschten Feststoffen, der Konzentration oder Aktivität, Vereinigen der konzentrierten Stämme, um eine Aufschlämmungsmischung zu erzeugen, und Sprühtrocknen der Aufschlämmungsmischung, um einzelne Partikel zu erhalten, die Toxine aus sowohl *Bacillus thuringiensis* Unterart *israelensis* als auch aus *Bacillus sphaericus* enthalten.

2. Das Verfahren gemäß Anspruch 1, worin die Partikel in verschiedenen Produktformen von Larvenvertilgungsmitteln verwendet werden, gewählt aus der Gruppe bestehend aus Pulvern, Körnchen, benetzbaren Pulvern, wasserdispergierbaren Körnchen, Pellets, Briketts, wässrigen Suspensionen, emulgierbaren Suspensionen und wässrigen oder nicht-wässrigen Konzentraten.

3. Das Verfahren gemäß Anspruch 1, das das Hinzufügen einer Komponente zu der Zusammensetzung umfasst, die gewählt ist aus der Gruppe bestehend aus einem oberflächenaktiven Mittel, einem inerten Träger, einem Konservierungsmittel, einem Benetzungsmittel, einem Fütterungsstimulans, einem Lockmittel, einem Einschlussmittel, einem Bindemittel, einem Emulgator, einem Farbstoff, einem UV-Schutzmittel, einem Puffer, einem Abdriftregelungsmittel, einem Vernebelungsmittel, einem Fließmittel und Kombinationen daraus.

4. Ein Produkt, das durch das Verfahren gemäß Anspruch 1 herstellbar ist.

5. Ein Verfahren zur Bekämpfung der Dipteran-Larve, umfassend das Ausbringen einer larvenvertilgungswirksamen Menge eines Produkts, welches durch das Verfahren gemäß Anspruch 1 herstellbar ist, in eine Umgebung, die Dipteran-Larven enthält.

**Revendications**

1. Procédé pour préparer une composition comprenant une association d'une souche de la sous-espèce *israelensis* de *Bacillus thuringiensis* et une souche de *Bacillus sphaericus* comprenant les étapes consistant à faire fermenter les souches séparément, à concentrer chaque souche aux solides, à la concentration ou à l'activité recherchés, à combiner les souches concentrées pour former un mélange de bouillie et à sécher par pulvérisation le mélange de bouillie pour donner des particules individuelles qui contiennent des toxines de la sous-espèce *israelensis* de *Bacillus thuringiensis* et des toxines de *Bacillus sphaericus.*

**2.** Procédé selon la revendication 1 dans lequel les particules sont utilisées dans diverses formes de produits larvicides choisies dans le groupe consistant en des poudres, des granules, des poudres mouillables, des granules hydrodispersables, des pellets, des briquettes, des suspensions aqueuses, des suspensions émulsifiables et des concentrés aqueux ou non aqueux.

**3.** Procédé selon la revendication 1 comprenant l'ajout à ladite composition d'un composant choisi dans le groupe consistant en un agent tensio-actif, un porteur inerte, un conservateur, un humectant, un stimulant de l'alimentation, un attractant, un agent encapsulant, un lieur, un émulsifiant, un colorant, un protecteur anti-UV, un tampon, un agent de contrôle de la dérive, une aide au dépôt de jet, un agent d'écoulement et leurs associations.

**4.** Produit pouvant être produit par le procédé selon la revendication 1.

**5.** Procédé de contrôle de larves de diptères comprenant les étapes consistant à introduire une quantité larvicide efficace d'un produit, pouvant être produit par le procédé selon la revendication 1 dans un environnement contenant des larves de diptères.